(19) Europäisches Patentamt
European Patent Office
Office européen des brevets

(11) **EP 1 936 225 A1**

(12) **DEMANDE DE BREVET EUROPEEN**

(43) Date de publication:
**25.06.2008 Bulletin 2008/26**

(51) Int Cl.:
***F16D 55/36*** *(2006.01)*

(21) Numéro de dépôt: **06301292.6**

(22) Date de dépôt: **22.12.2006**

(84) Etats contractants désignés:
**AT BE BG CH CY CZ DE DK EE ES FI FR GB GR HU IE IS IT LI LT LU LV MC NL PL PT RO SE SI SK TR**
Etats d'extension désignés:
**AL BA HR MK RS**

(71) Demandeur: **Delphi Technologies, Inc.**
**Troy, MI 48007 (US)**

(72) Inventeurs:
• **Friderich, Jean**
 **78300 Poissy (FR)**
• **Padiolleau, Eric**
 **60200 Compiegne (FR)**

(74) Mandataire: **Laget, Jean-Loup**
**Cabinet PEUSCET**
**161, rue de Courcelles**
**75017 Paris (FR)**

(54) **Dispositif de freinage**

(57) Dispositif de freinage (1) comprenant un support (2), un moyeu (3), un disque de freinage interne (4) et un disque de freinage externe (5) aptes à se déplacer axialement par rapport audit moyeu, un étrier (6), une plaquette de frein externe (9), une plaquette de frein centrale (10), une plaquette de frein interne (11), un actionneur (12) apte à générer une première force (13) pour serrer lesdites plaquettes de frein contre lesdits disques de freinage afin de ralentir la rotation dudit moyeu, caractérisé par le fait que ledit étrier est apte à se déplacer axialement par rapport audit support, ledit actionneur étant agencé de manière que lorsqu'il génère ladite première force, il génère également une deuxième force (14) pour déplacer ledit étrier dans le sens opposé au déplacement de ladite plaquette de frein interne, au moins un élément élastique (15) étant agencé de manière à être comprimé par ledit déplacement dudit étrier provoqué par ladite force de réaction.

FIG.3

EP 1 936 225 A1

# Description

La présente invention se rapporte à un dispositif de freinage, en particulier à un dispositif de freinage à double disque pour véhicule automobile.

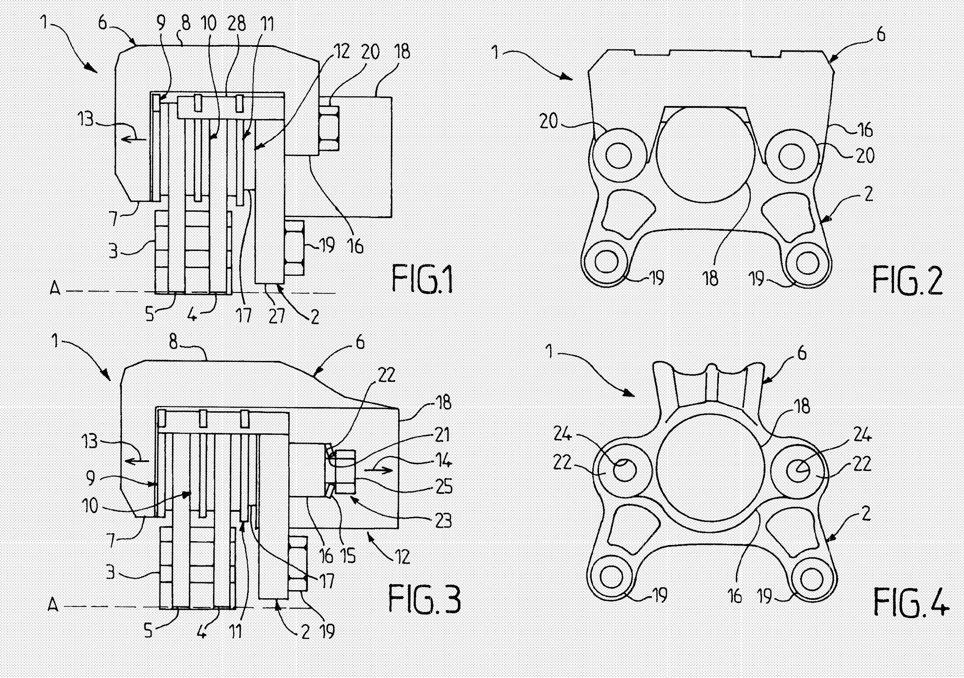

Les figures 1 et 2 représentent un dispositif de freinage à double disque pour véhicule automobile, d'un type connu. Le dispositif de freinage 1 comprend un support 2 destiné à être fixé par des boulons 19 à un porte-fusée (non-représenté). Un moyeu 3 est apte à tourner autour d'un axe A et porte deux disques de freinage : un disque de freinage interne 4 et un disque de freinage externe 5. Sur la figure 1, seule une moitié supérieure du moyeu 3 et des disques de freinage est représentée. Dans la présente description, les mots « externe » et « interne » sont utilisés pour désigner la position d'éléments qui se trouvent, lorsque le dispositif de freinage 1 est utilisé dans un véhicule automobile, respectivement vers l'extérieur ou l'intérieur du véhicule. Les disques de freinage sont solidaires en rotation du moyeu 3 et peuvent coulisser sur celui-ci dans la direction de l'axe A.

Un étrier 6 est fixé au support 2 au niveau de sa paroi interne 16, par des boulons 20. L'étrier 6 comprend également une paroi externe 7 et un pont 8 qui relie la paroi interne 16 à la paroi externe 7 en contournant les disques de freinage, qui sont agencés partiellement entre la paroi interne 16 et la paroi externe 7.

Une plaquette de frein externe 9 est fixée à la paroi externe 7, une plaquette de frein centrale 10 est agencée entre le disque de freinage externe 5 et le disque de freinage interne 4, et une plaquette de frein interne 11 est agencée entre le disque de freinage interne 4 et une portion verticale 27 du support 2. Comme on peut le voir sur la figure 1, chaque plaquette de frein comprend une plaque de support et une garniture de frottement (ou deux dans le cas de la plaquette de frein centrale 10). La plaquette de frein centrale 10 et la plaquette de frein interne 11 reposent sur une portion horizontale 28 du support 2 et peuvent coulissent dessus.

Le dispositif de freinage 1 comprend également un actionneur 12 qui comprend un cylindre 18 fixé au support 2 et un piston 17 apte à faire saillie hors du cylindre 18. La plaquette de frein interne 11 est fixée au piston 17.

Le fonctionnement du dispositif de freinage 1 des figures 1 et 2 est le suivant. Quand un freinage est désiré, un signal de freinage est envoyé à l'actionneur 12. Le piston 17 se déplace en direction de la paroi externe 7, et exerce une force d'action représentée par la flèche 13 qui a pour effet de déplacer la plaquette de frein interne 11, le disque de freinage interne 4, la plaquette de frein centrale 10 et le disque de freinage externe 5 vers la plaquette de frein externe 9 et la paroi externe 7. La paroi externe 7 étant fixe par rapport au support 2, la réaction de l'action du piston 17 est supportée par le support 2, cela provoque un serrage des plaquettes de frein sur les disques de freinage, et donc un ralentissement de la rotation du moyeu 3. La réaction de l'effort du piston 17 se fait au fond du cylindre 18 qui est lui-même solidaire du support 2, l'ensemble est donc immobile. Dans cet état serré, les disques de freinage sont un peu inclinés en raison de la force de frottement des disques de freinage sur le moyeu 3. D'autre part, en raison de l'effort de serrage et en fonction de celui-ci, l'étrier 6 se déforme et induit donc un mouvement supplémentaire des pièces mobiles vers l'extérieur.

Lorsque le freinage n'est plus désiré et qu'un signal correspondant est envoyé à l'actionneur 12, le piston 17 se déplace de manière à s'éloigner de la paroi externe 7, créant un jeu entre la plaquette de frein interne 11 et le disque de freinage interne 4. Dans le même temps, l'étrier 6 se contracte pour revenir à sa forme initiale et repousser les pièces mobiles vers le piston 17. Sous l'effet du relâchement de l'effort de serrage et de la force centrifuge, les disques de freinage reprennent une position sensiblement droite, c'est-à-dire perpendiculaire à l'axe A. Toutefois une légère inclinaison subsiste. Cette légère inclinaison est utile pour aider à la création d'un jeu entre les disques de freinage et les plaquettes de frein mais en raison de la force nécessaire pour coulisser, le jeu n'est pas réparti de manière égale entre chaque composant.

Un couple de freinage résiduel est donc généralement généré car les disques de freinage restent en contact avec les plaquettes de frein au niveau d'au moins une ligne de contact. En particulier, le disque de freinage externe 5 reste en contact avec la plaquette de frein externe 9 et/ou la plaquette de frein centrale 10 au niveau d'une ou deux lignes de contact, le disque 5 ayant, pour se libérer, à vaincre son propre effort de coulissement plus celui de la plaquette centrale et du disque intérieur. Ce couple de freinage résiduel ralentit inutilement la rotation du moyeu 3 et peut provoquer une usure non-uniforme des plaquettes de frein.

L'invention a pour but de fournir un dispositif de freinage qui ne présente pas au moins certains des inconvénients précités de l'art antérieur. En particulier, l'invention vise à fournir un dispositif de freinage dans lequel le couple de freinage résiduel est nul, ou au moins limité.

Pour cela l'invention fournit un dispositif de freinage comprenant un support, un moyeu apte à tourner autour d'un axe par rapport audit support, un disque de freinage interne et un disque de freinage externe solidaires en rotation dudit moyeu et aptes à se déplacer axialement par rapport audit moyeu, un étrier présentant une paroi externe et un pont contournant lesdits disques de freinage, une plaquette de frein externe agencée entre ladite paroi externe et ledit disque de freinage externe, une plaquette de frein centrale agencée entre ledit disque de freinage externe et ledit disque de freinage interne, une plaquette de frein interne agencée entre ledit disque de freinage interne et ledit support, un actionneur apte à générer une première force pour déplacer ladite plaquette de frein interne en direction de ladite paroi externe de manière à vaincre un effort de coulissement desdits disques de freinage et desdites plaquettes de frein et serrer lesdites plaquettes de frein contre lesdits disques de freinage afin de ralentir la rotation dudit moyeu, caractérisé par le fait que ledit étrier est apte à se déplacer axialement par rapport audit support, ledit actionneur étant agencé de manière que lorsqu'il génère ladite première force, il génère également une deuxième force pour déplacer ledit étrier dans le sens opposé au déplacement de ladite plaquette de frein interne, au moins un élément élastique étant agencé de manière à être comprimé par ledit déplacement dudit étrier provoqué par ladite force de réaction.

Ainsi, lors du freinage, l'étrier se déplace et l'élément élastique est comprimé. Plus précisément, la première force se décompose en une force de frottement qui a pour effet de vaincre un effort de coulissement des disques de freinage et des plaquettes de frein, et une force de d'action qui génère un serrage. La deuxième force se décompose en une force de réaction égale à la force d'action, transmise à l'actionneur par l'étrier, et une force de compression qui a pour effet de déplacer l'étrier en comprimant l'élément élastique.

Lorsque le freinage est relâché, l'actionneur éloigne la plaquette de frein interne du disque de freinage interne et l'élément élastique se détend et déplace l'étrier de manière à écarter la paroi externe du disque de freinage externe. On crée ainsi un jeu de chaque côté des disques de freinage et des plaquettes de frein.

De préférence, ledit étrier comprend une paroi interne située du côté du disque de freinage interne opposé à ladite paroi externe, ledit pont reliant ladite paroi interne à ladite paroi externe, ledit actionneur comprenant un cylindre fixé à ladite paroi interne et un piston apte à faire saillie hors dudit cylindre pour déplacer ladite plaquette de frein interne.

Avantageusement, ledit élément élastique est agencé entre une première surface dudit support tournée vers ladite paroi externe et une deuxième surface dudit étrier opposée à ladite première surface.

Selon un mode de réalisation particulier, ledit support comprend une vis passant dans un orifice ménagé dans ladite paroi interne, ledit élément élastique étant agencé autour de ladite vis, ladite première surface étant définie par une tête de ladite vis, ladite deuxième surface entourant ledit orifice.

Selon un mode de réalisation particulier, ledit au moins un élément élastique comprend une rondelle du type Belleville.

Selon un mode de réalisation particulier, ledit au moins un élément élastique comprend un corps en élastomère.

De préférence, ledit étrier est apte à se déplacer axialement par rapport audit support entre une première position de butée et une deuxième position de butée dans laquelle ledit élément élastique est comprimé à sa position maximale.

Avantageusement, le déplacement dudit étrier entre ladite première position et ladite deuxième position a une amplitude d'au plus 0,15 mm. Cette amplitude correspond à la moitié du jeu de fonctionnement.

De préférence, ledit élément élastique est dimensionné de manière qu'une force de frottement, qui correspond à la première force minimale nécessaire pour déplacer au moins ledit disque de freinage interne, est supérieure à une force de compression, qui correspond à la deuxième force minimale pour déplacer ledit étrier en comprimant ledit élément élastique.

De préférence, le dispositif de freinage comprend deux éléments élastiquement déformables agencés de manière à être comprimés par ledit déplacement dudit étrier provoqué par ladite deuxième force.

Avantageusement, ladite plaquette de frein centrale est mobile axialement par rapport audit support.

L'invention fournir également un véhicule automobile comprenant au moins un dispositif de freinage selon l'invention ci-dessus.

L'invention sera mieux comprise, et d'autres buts, détails, caractéristiques et avantages de celle-ci apparaîtront plus clairement au cours de la description suivante d'un mode de réalisation particulier de l'invention, donné uniquement à titre illustratif et non limitatif, en référence aux dessins annexés. Sur ces dessins :

- la figure 1 est une vue de face d'un dispositif de freinage connu,
- la figure 2 est une vue de côté du dispositif de freinage de la figure 1,
- la figure 3 est une vue de face d'un dispositif de freinage selon un mode de réalisation de l'invention,
- la figure 4 est une vue de côté du dispositif de freinage de la figure 3,
- la figure 5 est une vue en coupe partielle du dispositif de freinage de la figure 3.

Sur les figures 3 à 5, on a utilisé les mêmes numéros de références que sur les figures 1 et 2 pour désigner des éléments identiques ou similaires. Certains de ces éléments ne seront plus décrits en détail.

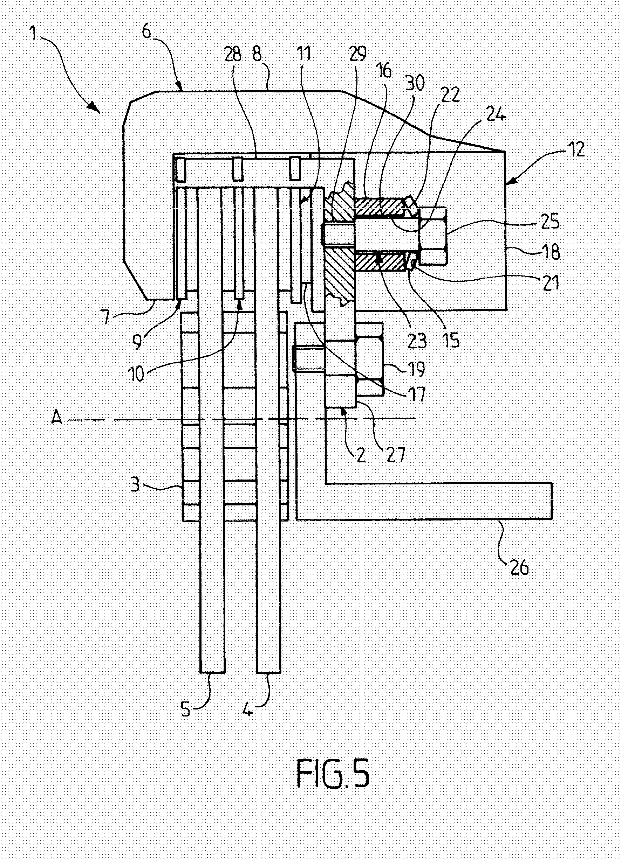

Dans le dispositif de freinage 1 représenté sur les figures 3 à 5, l'étrier 6 est relié au support 2 par deux vis 23. En raison de la symétrie, on ne décrit par la suite la liaison entre l'étrier 6 et le support 2 qu'au niveau d'une vis 23. Comme on peut le voir sur la vue en coupe de la figure 5, une vis 23 présente une extrémité 29 vissée dans un orifice de la portion verticale 27 du support 2, une portion centrale cylindrique 30 qui passe dans un orifice 24 ménagé dans la paroi interne 16 de l'étrier 6, et une tête 25. Les vis 23 ne sont pas représentées sur la figure 4 pour montrer les orifices 24.

La longueur de la portion centrale 30 est supérieure à la longueur de l'orifice 24. Ainsi, la tête 25 se trouve à une certaine distance de la paroi interne 16. Il y a donc une première surface 21 définie par la tête 25 qui se trouve en regard d'une deuxième surface 22 située autour de l'orifice 24 sur la paroi interne 16.

Un élément élastique 15 est agencé entre la première surface 21 et la deuxième surface 22. Dans le mode de réalisation représenté, l'élément élastique 15 est une rondelle du type Belleville agencée autour de la portion centrale 30. Bien entendu d'autres types d'élément élastique pourraient être envisagés, comme une rondelle en caoutchouc ou tout autre corps élastique, et l'élément élastique pourrait être agencé différemment.

On comprend que la façon de relier l'étrier 6 au support 2 qui vient d'être décrite permet, ici, à l'étrier 6 de se déplacer par rapport au support 2, dans la direction de l'axe A en étant guidé par les portions centrales 30 des vis 23. Plus précisément, l'étrier 6 peut se déplacer entre d'une part une première position représentée sur les figures 3 et 5, dans laquelle la paroi interne 16 de l'étrier 6 est en butée contre la portion verticale 27 du support 2, et d'autre part une deuxième position dans laquelle l'élément élastique 15 est comprimé à sa charge maximale d'utilisation. La deuxième position correspond à un déplacement de l'étrier 6 vers la droite des figures 3 et 5.

Le cylindre 18 de l'actionneur 12 est fixé à la paroi interne 16 de l'étrier 6.

Le fonctionnement du dispositif de freinage 1 des figures 3 à 5 est le suivant. Quand un freinage est désiré, un signal de freinage est envoyé à l'actionneur 12. Le piston 17 exerce une première force représentée par la flèche 13, qui tend à déplacer la plaquette de frein interne 11, le disque de freinage interne 4, la plaquette de frein centrale 10 et le disque de freinage externe 5 vers la plaquette de frein externe 9 et la paroi externe 7. Les forces de coulissement desdits plaquettes et disques de frein exercent une réaction sur le cylindre 18, , qui tend à déplacer l'étrier 6 vers la droite des figures 3 et 5.

L'élément élastique 15 est dimensionné de sorte que :

$$F_{ce} < F_{cid} + F_{cmp} + F_{cod}$$

avec :

- $F_{ce}$ : la force nécessaire pour comprimer l'élément élastique 15 et déplacer l'étrier 6 vers la droite,
- $F_{cid}$ : la force de frottement qu'il faut vaincre pour déplacer le disque de freinage interne 4 vers la gauche,
- $F_{cmp}$ : la force de frottement qu'il faut vaincre pour déplacer la plaquette de frein centrale 10 vers la gauche, et
- $F_{cod}$ : la force de frottement qu'il faut vaincre pour déplacer le disque de freinage externe 5 vers la gauche.

Ainsi lorsque l'actionneur 12 est activé, il produit d'abord le déplacement de l'étrier 6 et la compression de l'élément élastique 15. Ensuite, quand l'étrier 6 est dans sa deuxième position, l'actionneur 12 produit le serrage des plaquettes de frein sur les disques de freinage, et donc un ralentissement de la rotation du moyeu 3. La flèche 14 représente la somme de la force de réaction nécessaire au serrage et de la force nécessaire pour comprimé l'élément élastique 15.

Lorsque le freinage n'est plus désiré et qu'un signal correspondant est envoyé à l'actionneur 12, le piston 17 se déplace de manière à s'éloigner de la paroi externe 7 et l'élément élastique 15 se détend en déplaçant l'étrier 6 vers la gauche, jusque dans sa première position. Cela a pour effet de créer un jeu d'une part entre la plaquette de frein interne 11 et le disque de freinage interne 4, et d'autre part entre la plaquette de frein externe 7 et le disque de freinage externe 5.

Le déplacement de l'étrier 6 entre sa première position et sa deuxième position a une amplitude qui correspond à la moitié du déplacement du piston 17 entre sa position complètement sortie du cylindre 18 et sa position rétractée dans le cylindre 18. Ainsi, les deux jeux précités sont égaux (si on néglige l'effet de l'effort de coulissement de l'étrier 6 par rapport au support 2). Par exemple, le déplacement de l'étrier 6 présente une amplitude de 0,15 mm pour un déplacement du piston 17 de 0,3 mm.

Un jeu est également créé grâce à la légère inclinaison des disques de freinage, entre la plaquette de frein centrale 10 et les disques de freinage, de manière similaire à ce qui est décrit en référence au dispositif des figures 1 et 2.

On constate donc que dans le dispositif de freinage 1, en l'absence de freinage, il n'y a aucun contact entre la plaquette de frein interne 11 et le disque de freinage interne 4 et entre la plaquette de frein externe 7 et le disque de freinage externe 5. Il y a au plus un contact au niveau d'une ligne de contact entre la plaquette de frein centrale 10 et un ou deux disques de freinage. Le couple de freinage résiduel est donc nul ou faible par rapport à celui du dispositif de freinage des figures 1 et 2.

Bien que l'invention ait été décrite en liaison avec un mode de réalisation particulier, il est bien évident qu'elle n'y est nullement limitée et qu'elle comprend tous les équivalents techniques des moyens décrits ainsi que leurs combinaisons si celles-ci entrent dans le cadre de l'invention.

**Revendications**

1. Dispositif de freinage (1) comprenant un support (2), un moyeu (3) apte à tourner autour d'un axe (A) par rapport audit support, un disque de freinage interne (4) et un disque de freinage externe (5) solidaires en rotation dudit moyeu et aptes à se déplacer axialement par rapport audit moyeu, un étrier (6) présentant une paroi externe (7) et un pont (8) contournant lesdits disques de freinage, une plaquette de frein externe (9) agencée entre ladite paroi externe et ledit disque de freinage externe, une plaquette de frein centrale (10) agencée entre ledit disque de freinage externe et ledit disque de freinage interne, une plaquette de frein interne (11) agencée entre ledit disque de freinage interne et ledit support, un actionneur (12) apte à générer une première force (13) pour déplacer ladite plaquette de frein interne en direction de ladite paroi externe de manière à vaincre un effort de coulissement desdits disques de freinage et desdites plaquettes de frein et serrer lesdites plaquettes de frein contre lesdits disques de freinage afin de ralentir la rotation dudit moyeu, **caractérisé par le fait que** ledit étrier est apte à se déplacer axialement par rapport audit support, ledit actionneur étant agencé de manière que lorsqu'il génère ladite première force, il génère également une deuxième force (14) pour déplacer ledit étrier dans le sens opposé au déplacement de ladite plaquette de frein interne, au moins un élément élastique (15) étant agencé de manière à être comprimé par ledit déplacement dudit étrier provoqué par ladite force de réaction.

**2.** Dispositif de freinage selon la revendication 1, dans lequel ledit étrier comprend une paroi interne (16) située du côté du disque de freinage interne opposé à ladite paroi externe, ledit pont reliant ladite paroi interne à ladite paroi externe, ledit actionneur comprenant un cylindre (18) fixé à ladite paroi interne et un piston (17) apte à faire saillie hors dudit cylindre pour déplacer ladite plaquette de frein interne.

**3.** Dispositif de freinage selon la revendication 2, dans lequel ledit élément élastique est agencé entre une première surface (21) dudit support tournée vers ladite paroi externe et une deuxième surface (22) dudit étrier opposée à ladite première surface.

**4.** Dispositif de freinage selon la revendication 3, dans lequel ledit support comprend une vis (23) passant dans un orifice (24) ménagé dans ladite paroi interne, ledit élément élastique étant agencé autour de ladite vis, ladite première surface étant définie par une tête (25) de ladite vis, ladite deuxième surface entourant ledit orifice.

**5.** Dispositif de freinage selon l'une des revendications 1 à 4, dans lequel ledit au moins un élément élastique comprend une rondelle du type Belleville.

**6.** Dispositif de freinage selon l'une des revendications 1 à 5, dans lequel ledit au moins un élément élastique comprend un corps en élastomère.

**7.** Dispositif de freinage selon l'une des revendications 1 à 6, dans lequel ledit étrier est apte à se déplacer axialement par rapport audit support entre une première position de butée et une deuxième position de butée dans laquelle ledit élément élastique est comprimé à sa position maximale.

**8.** Dispositif de freinage selon la revendication 7, dans lequel le déplacement dudit étrier entre ladite première position et ladite deuxième position a une amplitude d'au plus 0,15 mm.

**9.** Dispositif de freinage selon l'une des revendications 7 à 8, dans lequel ledit élément élastique est dimensionné de manière qu'une force de frottement, qui correspond à la force d'action minimale nécessaire pour déplacer au moins ledit disque de freinage interne, est supérieure à une force de compression, qui correspond à la force de réaction minimale pour déplacer ledit étrier en comprimant ledit élément élastique.

**10.** Dispositif de freinage selon l'une des revendications 1 à 9, comprenant deux éléments élastiquement déformables agencés de manière à être comprimés par ledit déplacement dudit étrier provoqué par ladite force de réaction.

**11.** Dispositif de freinage selon l'une des revendications 1 à 10, dans lequel ladite plaquette de frein centrale est mobile axialement par rapport audit support.

**12.** Véhicule automobile comprenant au moins un dispositif de freinage selon l'une des revendications 1 à 11.

FIG.2

FIG.4

FIG.1

FIG.3

FIG.5

**Office européen des brevets**

**RAPPORT DE RECHERCHE EUROPEENNE**

Numéro de la demande

EP 06 30 1292

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | EP 1 701 054 A (AUDI NSU AUTO UNION) 13 septembre 2006 (2006-09-13) * le document en entier * ----- | 1 | INV. F16D55/36 |
| A | DE 43 04 616 A1 (DAIMLER BENZ) 18 août 1994 (1994-08-18) * colonne 6, ligne 50 - ligne 67; figures 1b,5 * ----- | 1 | |

**DOMAINES TECHNIQUES RECHERCHES (IPC)**

F16D

Le présent rapport a été établi pour toutes les revendications

| Lieu de la recherche | Date d'achèvement de la recherche | Examinateur |
|---|---|---|
| La Haye | 30 mai 2007 | Becker, Reinhold |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

......................................................................
& : membre de la même famille, document correspondant

EPO FORM 1503 03.82 (P04C02)

**EP 1 936 225 A1**

**ANNEXE AU RAPPORT DE RECHERCHE EUROPEENNE
RELATIF A LA DEMANDE DE BREVET EUROPEEN NO.**

EP 06 30 1292

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

30-05-2007

| Document brevet cité au rapport de recherche | | Date de publication | Membre(s) de la famille de brevet(s) | Date de publication |
|---|---|---|---|---|
| EP 1701054 | A | 13-09-2006 | DE 102005010758 A1 | 21-09-2006 |
| DE 4304616 | A1 | 18-08-1994 | AUCUN | |

Pour tout renseignement concernant cette annexe : voir Journal Officiel de l'Office européen des brevets, No.12/82

EPO FORM P0460

9